# EUROPEAN PATENT APPLICATION

(11) **EP 3 862 092 A1**
(43) Date of publication of application: **11.08.2021**
(21) Application number: 21155102.3
(22) Date of filing: 03.02.2021
(51) Int. Cl.: B01L 3/02, B01L 3/00, G01N 35/10

(54) **REAGENT DELIVERY SYSTEM**

(30) Priority: 04.02.2020 US 202062969862 P
(71) Applicant: Tecan Genomics, Inc., Redwood City, CA 94063 (US)
(72) Inventor: AMORESE, Douglas A., Redwood City, California 94063 (US)
(74) Representative: Graham Watt & Co LLP

(57) **Abstract**

Prepackaged reagent reservoirs with associated nozzles allow for accurate, repeatable distribution of reagents in various types of reactions, reducing the risk of human error. Series of reservoirs may be arrayed on a sheet or plane for automated manipulation providing a simply format for organizing, storing, transporting, and distributing reagents needed in complex reactions such as those in the molecular biology field.

## Description

### Technical Field

The disclosure relates to reagent containment and delivery.

### Background

Many analytical techniques require the use of precise, and sometimes small, amounts of reagent. In molecular biology for example, reactions are often conducted in microfluidic environments and several reagents must be combined in precise amounts and ratios to ensure an acceptable result. Furthermore, many reactions are sensitive to contamination and reagents must therefore be stored and manipulated in a controlled environment. Various attempts to automate reagent delivery can remove some human error but come with their own shortcomings.

Existing methods of automated reagent delivery include robotic fluid handlers and microfluidic devices. Typically, fluid is distributed from a central reservoir into reaction wells. The hardware used in fluidic devices has many moving parts, is expensive, challenging to maintain, and large in size. Hardware that controls microfluidic chips is simpler, less expensive, and small but chips used for dispensing reagents and conducting reactions can be expensive. Hardware used with fluid handlers offers programmable flexibility but are expensive due in part to associated programming costs.

Microfluidic chips are less flexible, they can be difficult to customize, and costs can escalate with additional layers, precision requirements, and additional channels or reservoirs. Inkjets have been coupled to robotic platforms but they are typically dedicated to a particular reagent (not washed and refilled), have dead volumes, must be primed, and reagents must be kept cool prior to dispensing. Due to set-up time and reagent overfill (dead volumes) robotic platforms are most practical with large numbers of samples (e.g., greater than 96 samples to be run under identical conditions). For ease of design, microfluidic chips frequently process a single sample through multiple steps or multiple samples through a single step.

### Summary

The invention provides reagent delivery systems for the precise delivery of defined reagent volumes. Delivery systems include a reservoir having a deformable portion that, when actuated, causes delivery of reagent contained therein through a nozzle integrated into a wall of the reservoir. Such reservoirs can have a dead space due to an imperfect compression of the deformable portion causing some portion of the reagent to remain trapped in the reservoir after expression. That inefficiency results in wasted reagent, added costs, and imprecise delivery that can negatively impact sensitive reactions. This disclosure addresses that issue by providing for the addition of an inert solution that occupies the dead space within the reservoir to insure that the entire contained reagent is expressed through the nozzle and only some portion of the inert solution remains. Accordingly, minimal reagent is wasted and the volume of reagent expressed into a reaction can be precisely controlled. Furthermore, because the filler solution is inert, it will not affect the reaction should any be expressed into a reaction along with the reagent.

In a preferred embodiment, the delivery system is a blister pack comprising first and second barriers forming a reservoir for containing reagent and inert solution immiscible with the reagent. A nozzle is integrated in at least one of the barriers and at least one of the barriers forming the reservoir is deformable so as to push reagent through the nozzle upon actuation of the deformable portion. The reservoir can be of any convenient shape and size. A preferred system comprises a first deformable barrier and a second barrier comprising an integrated nozzle to form the reservoir. The nozzle may be fabricated into the second barrier or may simply comprise an opening through which reagent does not flow absent actuation of the deformable first barrier. The nozzle allows precise delivery of reagent upon actuation and avoids a "bulk" reagent dump or spray as is typical in blister pack rupture in other contexts.

Preferably, the inert solution has a lower density than the reagent. This provides an arrangement in which the inert solution occupies a dead space between the reagent and deformable portion of a barrier. When the deformable portion of the barrier is pushed into the cavity containing reagent and inert solution, the inert solution facilitates delivery of reagent through the nozzle, thereby reducing a dead volume of reagent. For example, providing the inert solution may reduce the dead volume of reagent to less than 5% of the total volume of reagent. In certain embodiments, the reagent is oil.

A pre-determined volume of reagent is packaged into reservoirs to be stored or transported, ready for distribution into a reaction environment. Because the volumes of reagents are added to the reservoirs at a manufacturing or distribution point, in the precise amounts required for a given reaction, the potential for human errors at the bench top is avoided. Additionally, the reagents remain sealed in a controlled environment within the reservoir until immediately prior to use, minimizing the potential for contamination.

At the reaction site, reagents are distributed through the nozzle to direct evacuation of the reagent, manage reagent flow rates, or form droplets or otherwise manage delivery format of the reagent. Nozzles may be pre-formed in the reservoir or formed during an unsealing process (e.g., piercing the reservoir with an external nozzle).

At least one surface forming reagent-containing reservoirs is deformable, allowing the forcible evacuation of reagent. The rate of deformation and therefore the rate of reagent delivery can be controlled by varying the actuation force applied to the deformable portion of the reservoir. Reservoirs of the invention can be multiplexed. For instance, multiple reservoirs may be joined together on a sheet or plane and can be positioned to allow sequential addition of different reagents to a reaction at various times.

Reservoirs may be sealed by any of several methods after appropriate amounts of reagent have been added. A sealing film or foil may be applied to cover the nozzle opening and can be removed prior to evacuation of the reagent from the reservoir. The film or foil may be peeled away manually or by machine or may form a frangible seal and open in response to increased pressure within the reservoir (e.g., through deformation of the reservoir). The nozzle may comprise a valve that closes or opens to allow the contained reagent to be retained within or evacuated from the reservoir.

Sheets or planes may be optimized for machine manipulation and automated delivery of contained reagents. For example, a planar array of reservoirs may include through-holes or openings to allow for various additional reagents to be pipetted or otherwise added to a reaction chamber below the sheet to react with reagents expelled from the reservoirs. Sheets or planes may comprise indexing marks or notches to be read by a machine to indicate positioning of one or more of the reservoirs with relation to a reaction chamber or a manipulation tool (e.g., a plunger for deforming the reservoir and evacuating its contents). Accordingly, an automated reagent delivery apparatus of the invention may execute programmed instructions by identifying specific reagent-containing reservoirs and adding their contents to a reaction chamber in a certain sequence and at specific intervals.

Reagents may be stored in a central reservoir in a plane or sheet and distributed in designated portions to various other reservoirs through a manifold to be evacuated through nozzles into a reaction. For example, dry reagents may be stored in a series of reservoirs connected to a central, liquid-containing reservoir. The dry reagents may be more stable in that state, allowing for longer or easier storage. The liquid reagent may be distributed to the various reservoirs containing the dry reagents through a sealed manifold (maintaining a controlled environment and minimizing contamination) just prior to use.

Aspects of the invention may include a reagent delivery system comprising a reservoir defined by a first barrier and a second barrier wherein at least one of the first and second barriers comprises a deformable portion and at least one of the first and second barriers comprises a nozzle. The reservoir can be configured to discharge one or more reagents contained therein through the preformed nozzle upon actuation of the deformable portion.

The nozzle may be pre-formed and the reservoir can have an interior volume from about 5µl to about 100µl, inclusive. The nozzle may have a diameter from about 100µm to about 600µm inclusive. The nozzle may taper from a diameter of about 0.5mm near an interior opening in the reservoir to a diameter of about 0.6mm near an exterior opening outside the reservoir. Alternatively, the taper may be from about 1mm near the interior to about 1.2mm near the exterior or any combination in that range (e.g., 1/0.6mm; 1.8mm/1.2mm).

The reservoir may be disposed in a plane or sheet comprising a plurality of reservoirs. The plane can include indexing marks for locating one or more of the plurality of reservoirs. The plane may include one or more openings.

The preformed nozzle may be configured to retain reagents in the reservoir until the deformable portion is actuated. The preformed nozzle can include a sealing member configured to seal the reagents in the reservoir until the deformable portion is actuated. The sealing member may be frangible. The sealing member may include a removable film. The sealing member can include a valve. The sealing member may also comprise a plug and the plug may be composed of either inert or active materials. Moreover, the plug may be ejected by the reagent contents when the reservoir is disrupted (i.e., when the frangible portion is actuated). Alternatively, the plug may be removed prior to actuation. It is also contemplated that the plug material is changed (thermally or otherwise) such that it no longer presents a barrier to ejection of reagents. The nozzle may also be separated from air in the reservoir by a hydrophobic mesh.

In certain aspects, the invention may include a reagent delivery system comprising a deformable reservoir comprising a preformed nozzle, an upper sealing layer coupled to a top of the deformable reservoir, and a removable lower sealing layer, releasably coupled to the preformed nozzle and, in combination with the upper sealing layer, sealing one or more reagents within the deformable reservoir. The system can be configured such that removal of the lower sealing layer allows for the one or more reagents to be dispensed through the preformed nozzle upon compression of the deformable reservoir.

The upper and/or lower sealing layer can include a polymer film. The upper and/or sealing layer may be coupled to the top of the deformable reservoir and/or the nozzle by a pressure sensitive adhesive. Reservoirs of the invention may comprise a plastic.

Aspects of the invention may include a reagent delivery system comprising a multilayered sheet comprising a blister layer comprising a plurality of sealed, deformable reservoirs with one or more reagents disposed therein, a piercing layer comprising a plurality of hollow piercing members, the piercing layer positioned proximate to the blister layer such that the plurality of hollow piercing members align with the plurality of sealed, deformable reservoirs, wherein each of the plurality of hollow piercing member comprises a nozzle opposite the blister layer. The multilayered sheet may be configured such that the blister layer does not normally contact the piercing layer but, upon application of a force compressing one of the plurality of sealed, deformable reservoirs toward a corresponding hollow piercing member, dispenses the one or more reagents through the nozzle of the corresponding hollow piercing member.

In some aspects, this disclosure provides a method for reducing a dead volume of reagent in a reagent delivery system. The method includes the steps of providing a reagent reservoir containing a reagent, and introducing an inert solution that is immiscible with the reagent. In particular, the reservoir has a first and second barrier defining a cavity for containing the reagent and inert solution, the first barrier including a deformable portion and the second barrier having a nozzle. The deformable portion is configured to push into the cavity and dispense reagent through the nozzle.

The step of introducing of inert solution improves delivery of the reagent by filling a dead space within the reservoir. Preferably, the inert solution has a lower density than the reagent, and occupies a dead space between the reagent and the deformable portion inside the cavity. Upon actuation of the deformable portion, the inert solution helps express reagent from the nozzle and prevents reagent from getting trapped in certain areas of the reservoir.

### Brief Description of the Drawings

FIG. 1 shows a reservoir of the invention.
FIG. 2 shows a reservoir with a removable sealing layer.
FIG. 3 shows a reservoir and a piercing nozzle as part of two separate layers of a plane.
FIG. 4 shows a plane comprising a blister layer and piercing layer.
FIG. 5 shows a plane comprising a blister layer and a piercing layer with piercing nozzles and indexing notches.
FIG. 6 shows a tear-away reservoir plane according to certain embodiments.
FIG. 7 shows reagent being excreted through nozzles in a tear away reservoir plane.
FIG. 8 shows a plane of reservoirs connected to a central reagent reservoir and an air pressure source via a manifold.
FIG. 9 shows a cut-away view of a plane of reservoirs filled via a central reagent reservoir.
FIG. 10 shows a plane of reservoirs connected to a central reagent reservoir via different length manifold paths to equalize nozzle pressure.
FIG. 11 shows a process for reconstituting dry reagents from a central reagent reservoir before ejecting the reconstituted reagents through nozzles in a reservoir plane.
FIG. 12 shows a reservoir plane configured for sequential reagent ejection.
FIG. 13 shows a cut-away view of a reservoir plane configured for sequential reagent ejection.
FIG. 14 shows an apparatus for automated processing of a reservoir plane comprising piercing and blister layers.
FIG. 15 shows an apparatus for automated reagent delivery to a series of multi-well plates.
FIG. 16 shows a reservoir containing reagent and inert solution with a cavity primarily defined by its first barrier.
FIG. 17 illustrates delivery of reagent from a reservoir with a cavity primarily defined by its first barrier.
FIG. 18 shows a reservoir containing reagent and inert solution with a cavity primarily defined by its second barrier.
FIG. 19 illustrates delivery of reagent from a reservoir with a cavity primarily defined by its second barrier.

### Detailed Description

Systems and methods of the invention provide for affordable, automated distribution of accurate reagent volumes for use in reactions in fields such as molecular biology. Unit-fill reservoirs, or blisters, are used to store, transport, organize, and distribute specified reagent volumes for use in various reactions. The disclosed systems and methods allow for processing small numbers of samples through multiple steps with minimal set-up time and no dead volume or priming. Specific volumes of various reagents required for certain reactions are pre-packaged into reservoirs to be stored or transported, ready for distribution into a reaction environment. The reagents remain sealed in reservoirs until time for use, minimizing the potential for contamination. At the reaction site, reagents are distributed through a nozzle (preformed in the reservoir or as part of a piercing member) that directs evacuation of the reagent, manages reagent flow rates, or forms droplets or otherwise manages delivery format of the reagent.

Once filled at, for example, a kit manufacturer's site, reservoirs or blisters of the invention can be sealed with a membrane having a preformed nozzle for reagent delivery. A simple hardware device, manually or automatically operated, compresses these reagent filled blisters to dispense the contents of the blister into a reaction vessel situated below the nozzle. A preconfigured set of blisters and indexing marks allows for machine control of the distribution of multiple reagents and complex methods to be executed including processing of multiple samples simultaneously.

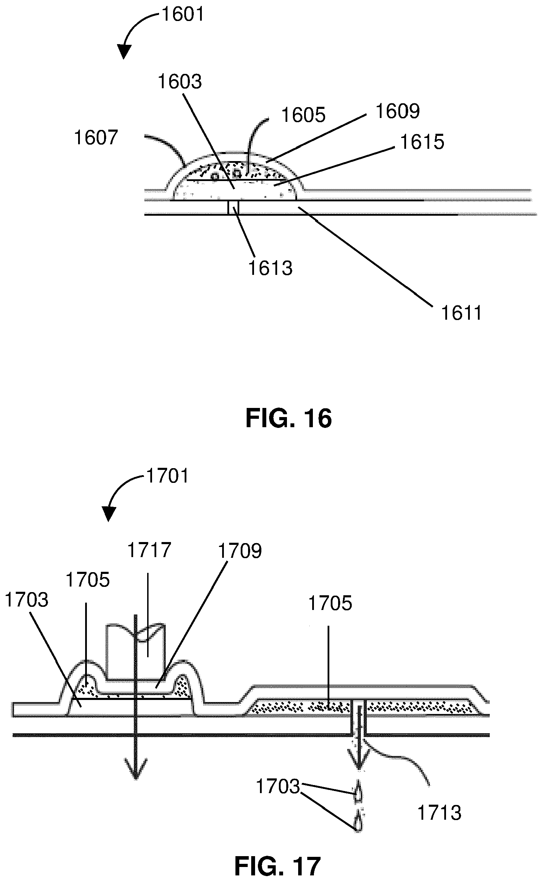

FIG. 16 shows a reservoir 1601 containing reagent 1603 and inert solution 1605. The reservoir includes a first barrier 1607 comprising a deformable portion 1609 and a second barrier 1611 comprising a nozzle 1613. The first and second barriers 1607, 1611 forming a cavity 1615 for containing the reagent 1603 and inert solution 1605, until actuation of the deformable portion 1609, at which point the deformable portion 1609 is collapsed to reduce a volume of the cavity 1615 and express the reagent 1603 through the nozzle 1613.

The inert solution 1605 provided by this disclosure is any suitable substance that is immiscible, and unreactive, with the reagent 1603. Preferably, the inert solution 1605 has a lower density than the reagent 1603, for example, an oil, to provide an arrangement in which the inert solution 1605 occupies a portion of the cavity 1615 between the reagent 1603 and the deformable portion 1609 of the first barrier 1607, also known as a dead space. By occupying dead space, the inert solution 1605 improves delivery of the reagent 1603 by helping push reagent 1603 through the nozzle 1613 upon actuation of the deformable portion 1609, thereby reducing an amount of reagent 1603 otherwise left behind in the reservoir 1601, which is known in the art as a dead volume. In some embodiments, the presence of inert solution may decrease the amount of dead volume to less than 5% of total reagent volume. Because the inert solution 1605 improves delivery of reagent 1603, providing inert solution 1605 to the reservoir 1601 provides a cost benefit to a researcher.

In some aspects, the inert solution 1605 improves delivery of reagent 1603 by filling dead space and increasing a total volume of solution within the reservoir 1601. For example, as the deformable portion 1609 is pressed into the cavity a small gap of dead space may exist between the deformable portion 1609 and solution of the reservoir 1601. This gap may be partially occupied by air molecules. Because air is more easily compressed than liquid, at least some of the air molecules occupying dead space escape before reagent 1603, leaving reagent 1603 trapped in the reservoir 1601. However, by providing inert solution 1605, the total volume of solution in the reservoir 1601 is increased and less dead space is occupied by air, thereby decreasing opportunities for air molecules to escape and increasing the volume of reagent 1603 that is expressed.

In various embodiments, an inert material may be substituted for the inert solution described above. That inert material may be solid or semisolid at room temperature such that, upon compression of the deformable portion of the reservoir, the inert material within the cavity can deform to occupy all remaining dead space therein to thereby force the entirety of the reagent through the nozzle.

The inert material may have a density less than or greater than that of the reagent depending on the intended use orientation of the delivery system. The density should be selected such that, when oriented for reagent expulsion, the reagent is positioned between the nozzle and the inert material. In various embodiments, the inert material may be added to the reservoir before or after the reagent and before attachment and sealing of the first or second barrier, completing the sealed reservoir. The inert material may be heated or otherwise fluidized to ease its addition to the reservoir and then thermally, chemically, or otherwise solidified or semisolidified after its addition. Semisolid inert materials include, for example, waxes, polymers, and gels of inert substances as well as additional materials that would be apparent to one of ordinary skill in the art.

FIG. 17 illustrates delivery of reagent 1703 from a reservoir 1701, consistent with this disclosure. FIG. 17 shows a pressure source 1717 (e.g., a plunger) compressing a deformable portion 1709 of the reservoir 1701 to reduce its volume, thereby increasing an internal pressure within the reservoir 1701 and expressing reagent 1703 through a nozzle 1713. As discussed above, an inert solution 1705 is provided to occupy dead space within the reservoir 1701 and improve delivery of reagent 1703 through the nozzle 1713. In particular, the inert solution occupies a region of the reservoir 1701 between the reagent 1703 and deformable portion 1709, and when the plunger 1717 pushes downward on the deformable portion 1709 to collapse the reservoir 1701, the presence of inert solution 1705 provides a force less compressible than air onto the reagent 1703 to facilitate its ejection through the nozzle 1713.

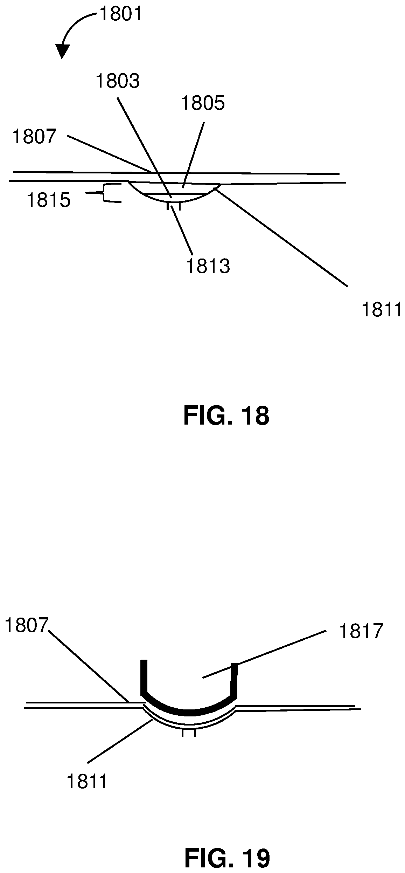

In certain embodiments, as illustrated in FIGS. 18 and 19, the bulk of the cavity 1815 is defined by a shaped second barrier 1811 while the first barrier 1807 consists of a film laid over the second barrier 1811 to seal the cavity 1815 (where the nozzle 1813 is temporarily sealed as described below). Such reservoirs 1801 may be filled by adding a reagent 1803 and an inert solution 1805 to the open second barrier 1811 and then covering with the first barrier 1807 and sealing (e.g., with heat) the two barriers together to form the cavity 1815 with reagent 1803 and inert solution 1805 contained therein. Where the reagent 1803 and inert solution 1805 are immiscible and of different densities, they can be added in any order to the open second barrier 1811 but, in any embodiment, the reagent 1803 is preferably added first to the open second barrier 1811 followed by the inert solution 1805 overlaying the reagent 1803.

As shown in FIG. 19, to maximize compression of the first barrier 1807 into the shaped second barrier 1811, the pressure source 1817 (e.g., plunger) may have be complementarily shaped to conform to the second barrier 1811. In the exemplary embodiment depicted in FIG.

19, for example, the second barrier 1811 has a bowled shape relative to the overlying first barrier 1807 and the pressure source 1817 comprises a plunger with a domed head complimentary to the bowl-shape of the second barrier 1811.

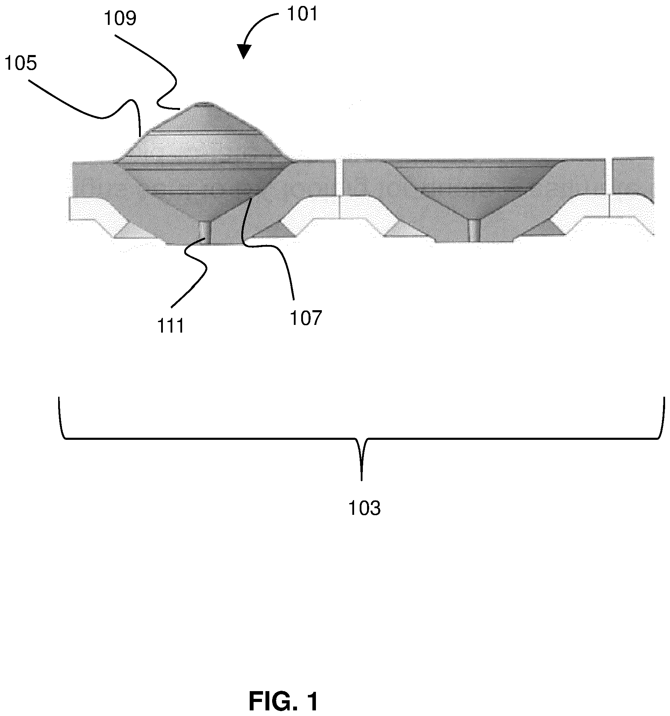

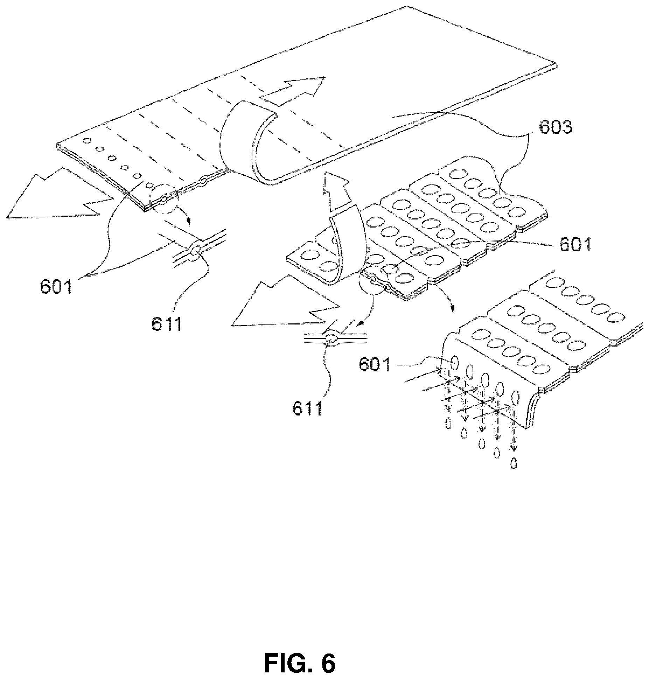

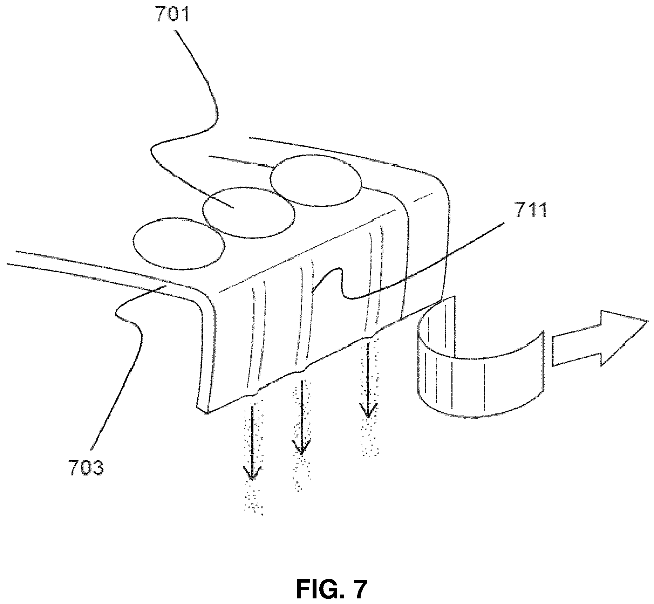

FIG. 1 shows a reservoir 101 as part of a sheet or plane 103 of multiple reservoirs 101 having a preformed nozzle 111, a first barrier 105 and a second barrier 107 configured to contain a reagent therein. The reservoir 101 also comprises a deformable portion 109 configured to collapse in response to an applied force, thereby decreasing the interior volume of the reservoir 101 and expelling the contained reagent through the nozzle 111. Reservoirs may be made out of any material including metals, glass, silicon, plastics, or composites. In certain embodiments, the deformable portion may be made of a plastic or other readily deformable material while the remaining components are formed from more rigid materials such as glass or metals. One of skill in the art will recognize that material selection will depend on several factors including avoiding reactivity with the reagents to be used with the system as well as physical considerations such as appropriate deformability and frangibility in embodiments such as those shown in FIGS. 6 and 7.

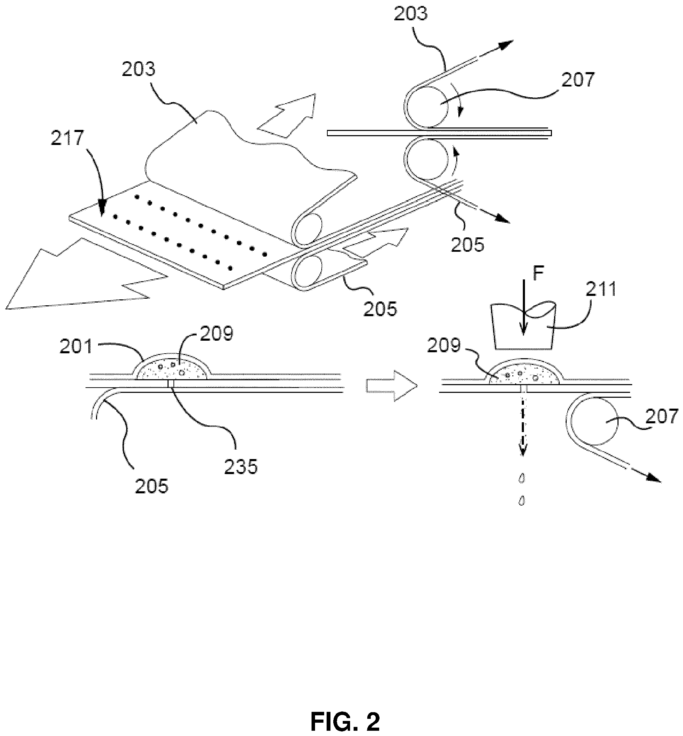

FIG. 2 shows a sheet or plane 217 of reservoirs 201 with removable sealing layers. An upper sealing layer 203 and a lower sealing layer 205 are peeled away from the plane 217 as it passes by a pair of rollers 207 to expose the reagent volumes within the reservoirs 201. Once at least the lower sealing layer 205 is peeled away, exposing the nozzle 235 of each reservoir 201, a plunger 211 can be actuated to deform the reservoir 201 and force the contained reagent 209 out through the nozzle 235. The upper and/or lower sealing layers (203, 205) can be made of a foil or a polymer film for example and may be sealed to the plane 217 by a pressure sensitive adhesive. The plane 217 of reservoirs 201 may be fed through an apparatus comprising the rollers 207 and the plunger 211 configured to remove the sealing layers (203, 205) to unseal the reservoirs 201 and eject their reagent 209 contents into a reaction chamber.

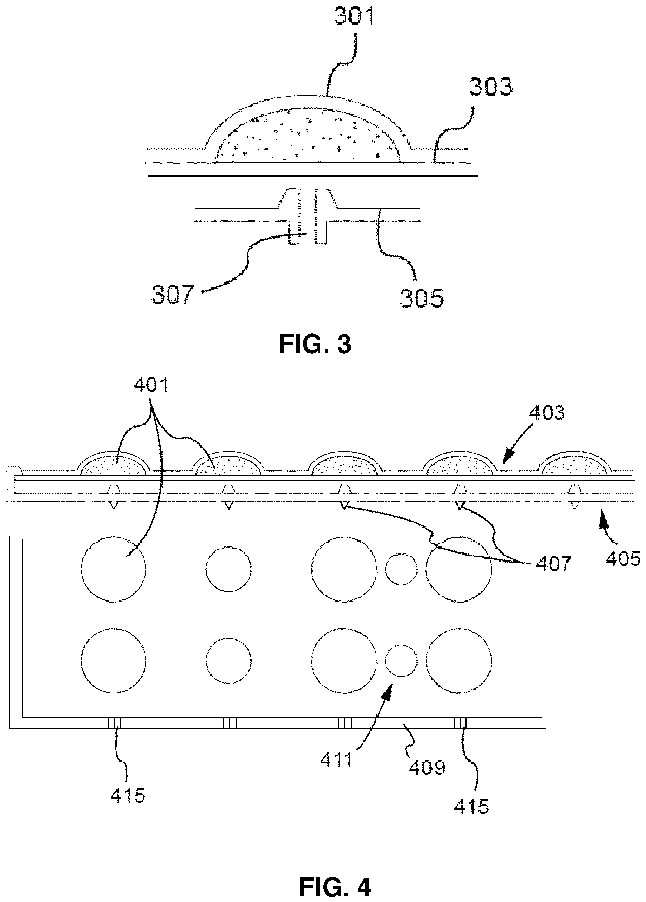

FIG. 3 shows a reservoir 301 not having a preformed nozzle where the nozzle 307 is part of a piercing layer 305 adjacent to the blister layer 303 containing the various reservoirs 301. The combined piercing layer 305 and blister layer 303 make up a single reservoir sheet or plane and, when compressed together, the nozzle 307 of the piercing layer 305 pierces the corresponding reservoir 301 of the blister layer 303 and forms a nozzle 307 through which the reagent contained in the reservoir 301 may be evacuated.

FIG. 4 illustrates a sheet or plane comprising multiple reservoirs 401 in a blister layer 403 and corresponding nozzles 407 in a piercing layer 405. The piercing layer 405 and blister layer 403 are positioned with respect to each other by a frame 409. The piercing 405 and/or blister layers 403 may have openings 411 through which additional reagents may be pipetted through into reaction chambers below the plane. The frame 409 or other locations on the plane may comprise indexing marks 415 or notches allowing for machine recognition and positioning of individual reservoirs 401 or rows of reservoirs 401 with respect to reaction chambers or plungers.

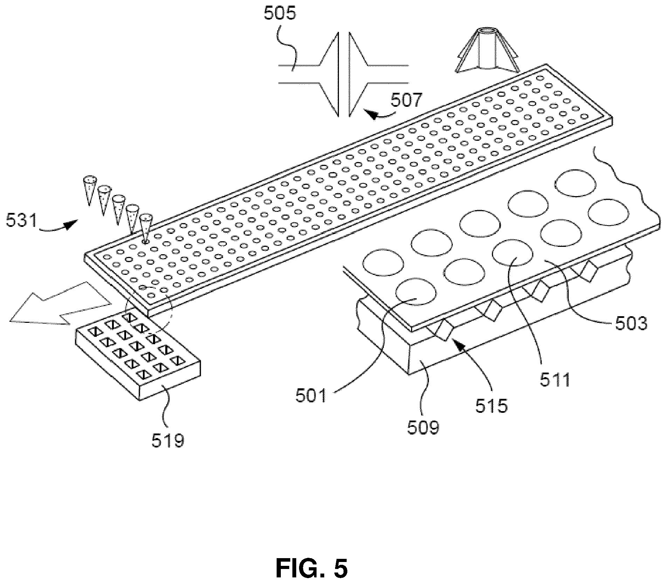

FIG. 5 shows a reservoir plane comprising a blister layer 503 and a piercing layer 505 with piercing nozzles 507. The plane can be fed through an apparatus by manipulation of the frame 509 and positioned with respect to an awaiting reaction chamber 519 (e.g., a multi-well plate) through identification and manipulation of indexing notches 515. Pipette tips 531 may be manually or automatically operated to add additional reagents to the reaction chamber 519 through openings 511 in the blister layer 503 and piercing layer 505. The reservoirs 501 may be laid out on the blister layer 503 such that they correspond spatially to the wells of a specific type of plate or other reaction chamber 519 so that, upon actuation of a deformable portion, each reservoir 501 in a row or column may deposit a reagent into a single corresponding well of the plate below. Similarly, the openings 511 may be spaced so that they correspond to individual wells of a plate or other type of reaction chamber 519 below.

FIG. 6 shows a tear-away reservoir plane 603. The plane 603 may comprise perforated lines or otherwise frangible areas configured to tear away in response to an application of force as shown in FIG. 6. Rows of reservoirs 601 within the plane 603 may be associated with preformed nozzles 611 within each row. The nozzles 611 may be sealed in the plane 603 and the frangible sections of the plane may be configured such that by tearing away each previous row of reservoirs 601 the nozzles 611 of the next row are exposed. The plane 603 may then be optionally bent to direct the nozzles 611 to an awaiting reaction chamber and the contained reagents may be ejected into the chambers. The tear-away plane 603 may be configured to have each row removed by hand or in an automated process via an apparatus configured to feed the plane 603 row by row over a reaction chamber and to tear away each row after use, exposing the next row of nozzles 611.

FIG. 7 shows reagent being excreted through nozzles 711 in a tear away reservoir plane 703. The plane 703 is bent, directing the exposed nozzles 711 downward and the reagent from each reservoir 701 is exiting through the nozzles 711. The nozzles 711 have been exposed through the peeling of a portion of the plane 703.

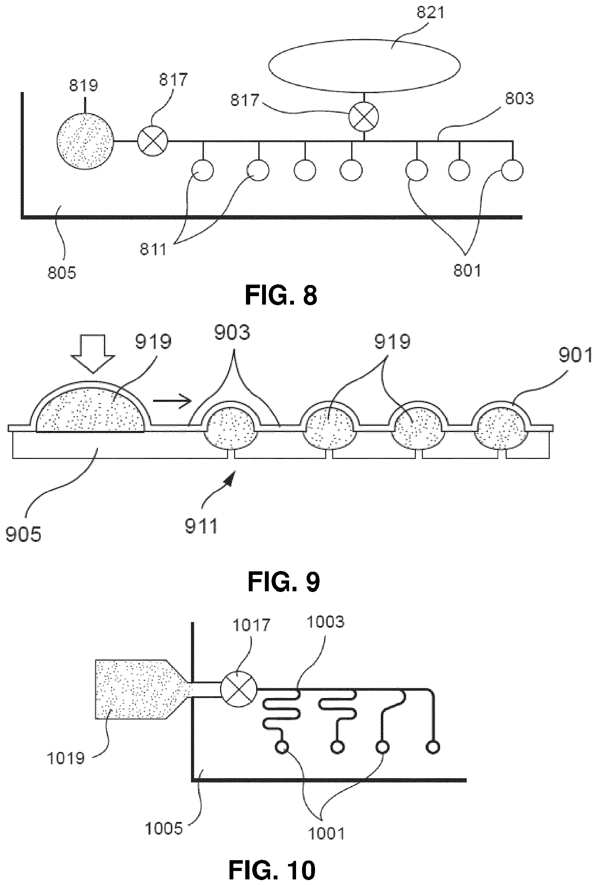

FIG. 8 shows a plane 805 of reservoirs 801 connected to a central reagent reservoir 819 and an air pressure source 821 via a distribution manifold 803. Each reservoir 801 comprises a preformed nozzle 811 that is sealed or otherwise configured to keep a reagent contained therein. The reagent reservoir 819 and the air pressure source 821 can each be coupled to the manifold via a valve 817. Pressure may be applied to the reagent reservoir 819 to distribute reagent to the various sealed reservoirs 801. Accordingly, a plane 805 may be prepared, shipped, and stored with reagent in a central reagent reservoir 819 and only distributed to the final nozzled reservoirs 801 just prior to ejection into a reaction chamber. The reagent reservoir 819 may be deformable so that application of pressure thereto forces the reagent to flow through the manifold 803 into the various other reservoirs 801. Alternatively, the reagent reservoir 819 may be pressurized such that, upon opening of a valve 817 coupling the reagent reservoir 819 to the manifold 803, reagent will flow to the lower pressure environment of the various reservoirs 801 for eventual ejection. The reservoirs 801 may be filled in a first process and then reagent ejected through nozzles 811 through a separate process. An air pressure source 821 such as a deformable reservoir filled with air or other gases or liquids may be coupled to the manifold 803 via a valve 817. After the reservoirs 801 have been filled with the appropriate amount of reagent from the reagent reservoir 819 the valve 817 coupling the reagent reservoir 819 to the manifold 803 may be closed. The valve 817 coupling the air pressure source 821 to the manifold 803 may then be opened and, through pressurization of the manifold 803 and the reservoirs 801, reagent may be forced through the nozzles 811 of each reservoir 801 into corresponding reaction chambers. The air pressure source 821 may be used in certain embodiments to spray the reagents through the nozzles 811 or to generate droplets by varying the amount of applied pressure. Alternatively a vacuum source may be applied to draw reagent into the reservoirs 801.

FIG. 9 shows a cut-away view of a plane 905 of reservoirs 901 filled via a central reagent reservoir 919. Reservoirs 901 may be filled from a central reagent reservoir 919 prior to ejection through preformed nozzles 911 via a distribution manifold 903 that connects the reservoirs 901 in series as shown in FIG. 9. Alternatively the manifold 803 may connect the reservoirs 801 in parallel as shown in FIG. 8. Accordingly, each reservoir may be filled at the same time (e.g., parallel as in FIG. 8) from a central reagent reservoir or may be filled sequentially (e.g., in series as in FIG. 9). As shown in FIG. 9, each nozzle 911 may be sealed in such a way as to allow for the filling of each reservoir 901 before reagent is ejected through the nozzle 911. For example, a removable sealing layer may be held in place an only removed after distribution of reagent from the reagent reservoir 919 to the individual reservoirs 901. Alternatively the nozzle 911 seals may be frangible and configured such that the pressure required to rupture the seals is greater than the pressure required to distribute the reagent to the reservoirs 919. In the latter example, application of force to the reagent reservoir 919 would first fill each reservoir 901 through the manifold 903 and then, upon application of further force, the internal pressure will increase to the necessary amount to rupture the seals and eject the reagent from each of the nozzles 911.

Manifold 1003 runner length can be varied in a parallel system as shown in FIG. 10 control when reagent reaches each reservoir 1001 from the reagent reservoir 1019 after opening of valve 1017 and application of force to the deformable reagent reservoir 1019. By equalizing the length of the path that reagent must flow from the reagent reservoir 1019 to reach each reservoir 1001 in the plane 1005, nozzle pressure can be equalized across multiple reservoirs 1001.

In certain embodiments, reagents may be held in the reservoirs in a dry or inactive state, in component form, or in any state that may require activation, addition, or alteration before use in the intended reaction. For example, reagents may have a limited shelf life once prepared or may have specialized storage requirements (e.g., temperature or light requirements) to avoid degradation or adverse reactions. By storing reagents in a more stable form (e.g., component form, dry form, or inactive form) and reconstituting just prior to use, shelf life can be increased and better results can be obtained from subsequent reactions involving the reagents.

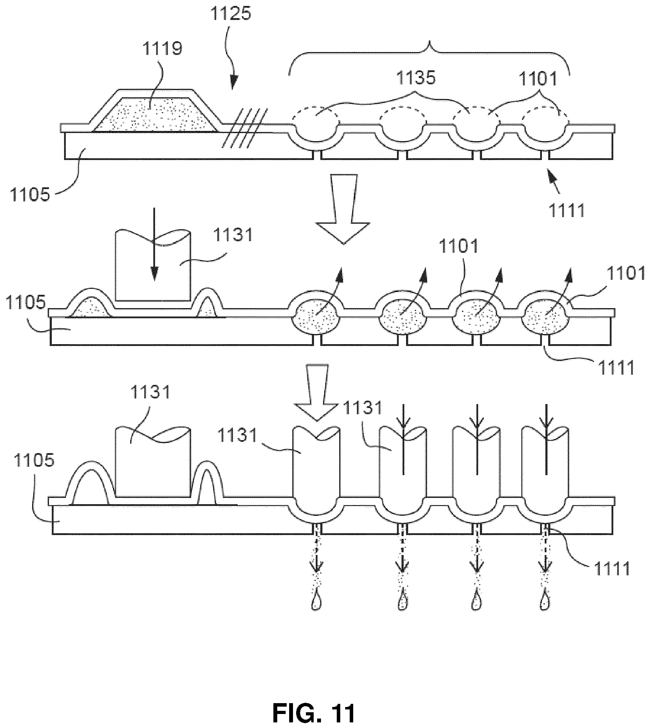

FIG. 11 shows a process for reconstituting dry reagents 1135 using a central reagent reservoir 1119 before ejecting the reconstituted reagents through nozzles 1111 in a reservoir plane 1105. Similar to the systems shown in FIGS. 8-10, some required portion of the final reagent can be maintained in a central reagent reservoir 1119 coupled to the other reservoirs 1101 via a manifold 1125 and, optionally, a valve. A plunger 1131, for example controlled by an apparatus of the invention, can compress the reagent reservoir 1119 at some point prior to use of the reagents. The reagent portion (e.g., water) held in the reagent reservoir 1119 can then flow through the manifold 1125 to the various reservoirs 1101 where the remaining reagent components (e.g., a dry reagent powder 1135) are. Once combined within the various reservoirs 1101, the final reagent is ready for ejection through the nozzles 1111 of the reservoirs 1101 into an awaiting reaction vessel. Additional plungers 1131 may be used to compress the reservoirs and valves associated with the manifold 1125 may be closed to prevent backflow and force the reagents out through the nozzles 1111.

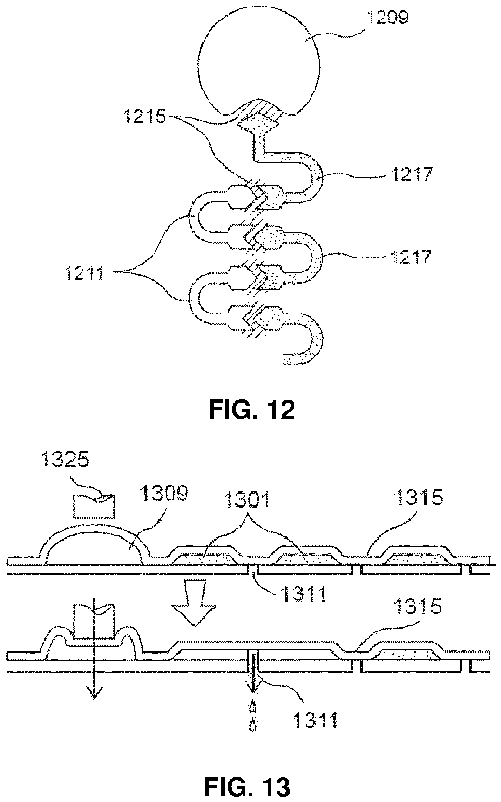

FIG. 12 shows a reservoir plane configured for sequential reagent ejection. A series of reagent reservoirs 1217 may be coupled to a series of ejection portions with nozzles 1211 by, for example, valves or frangible seals 1215. Reagents can be held in the reagent reservoirs 1217 separate from the ejection portions for storage and transport. A pressure source 1209 such as a deformable gas-filled reservoir may be coupled by a valve or frangible seal 1215 to the first of the reagent reservoirs 1217. The vales or frangible seals 1215 may be configured such that application of a certain amount of pressure from the pressure source 1209 will rupture the frangible seals 1215 sequentially forcing the reagent from the first reagent reservoir 1217 into the adjoining ejection portion and out of the nozzle 1211 before then rupturing the frangible seal 1215 connecting the next reagent reservoir 1217 and forcing the reagent therein into its adjoining ejection portion and out of its nozzle 1211. Alternatively connections between the various reagent reservoirs 1217 and ejection portions 1211 may be controlled by valves that are selectively opened and closed to provide access to the pressure source 1209.

FIG. 13 shows a cut-away view of a reservoir plane configured for sequential reagent ejection. As in FIG. 12, the pressure source 1309 may be compressed (e.g., by a plunger 1325) to increase internal pressure within the system to a point that a series of frangible seals 1313 rupture sequentially forcing reagents from a reagent reservoir 1301 out of a previously sealed adjoining nozzle 1311

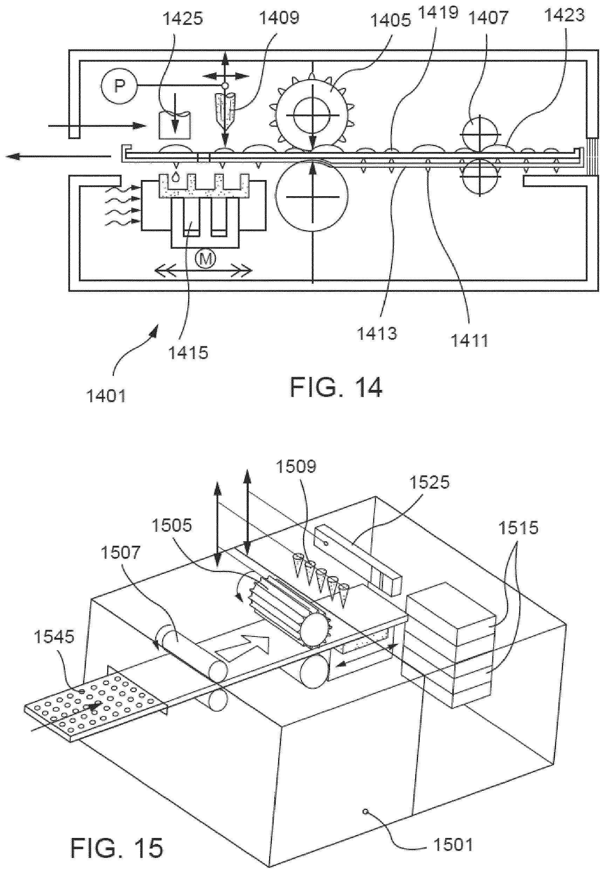

As noted, the reservoirs and reservoir planes discussed herein may be configured for automated use through an apparatus 1401 to further decrease opportunity for human error and ensure fidelity to reaction protocols. An example of such an apparatus 1401 is shown in FIG. 14. A reservoir plane, for example comprising a blister layer 1419 and a piercing layer 1413 as described above, can be fed into the apparatus 1401 through a port. The port may be sized or otherwise configured to only allow the reservoir plane to be inserted in one orientation to prevent errors. A feed roller 1407 interacts with the edges of the plane to draw it into the apparatus and move it along within the apparatus 1401 for processing while maintaining separation between the piercing layer 1413 and the blister layer 1419. Various portions of the apparatus 1401 may be cooled and/or heated depending on the requirements of reagent storage and reaction protocols. A piercing/indexing roller 1405 can then compress the piercing layer 1413 into the blister layer 1419 causing nozzles 1411 in the piercing layer 1413 to pierce the reagent containing reservoirs 1423. The piercing/indexing roller 1405 can interact with indexing marks or notches in the plane to identify and locate various rows of reservoirs 1323 with respect to other fixed components of the apparatus 1401. Subsequent to the piercing/indexing roller 1405, the plane is moved to a position above a reaction chamber 1415 (e.g., a multi-well plate). The reaction chamber 1415 maybe on a stage and can be subjected to controlled heating, cooling, shaking, magnetic manipulation, or other actions within the apparatus 1401 depending on the requirements of the reaction protocol. A series of automated pipettes 1409 may be positioned to add reagents to the reaction chamber 1415 through openings in the piercing 1413 and blister 1419 layers as the openings pass between the pipettes 1409 and the reaction chamber 1415. A manipulator such as a plunger 1425 or row of plungers 1425 is positioned above the reaction chamber 1415 and configured to compress a deformable portion of one or more reservoirs 1423 in one or more rows of the plane to eject their respective reagent contents into the reaction chamber 1415 below (e.g., one or more wells of a multi-well plate). The used plane or sheet can then be fed out of the apparatus 1401 through an exit port. The apparatus 1401 can be configured to exchange multiple reaction chambers 1415 at the stage beneath the plungers 1425 to conduct multiple reactions from a single reservoir plane.

A plane may comprise a sequence of reagents in a series of rows such that an entire reaction can be carried out by sequentially compressing each row's reservoirs. Each row may contain a single reagent and correspond to a well in a multi-well plate or a row of reaction chambers. Accordingly, a number of similar experiments may be performed simultaneously corresponding to the number of reservoirs in each row. The number of reagents needed to be added and the sequence in which they need to be added will dictate the number and position of the rows. The number of columns will correspond to the number of experiments simultaneously being performed.

Another exemplary apparatus 1501 is shown in FIG. 15. A reservoir plane 1545, as described above, can be fed into the apparatus 1501 through a port. A feed roller 1507 interacts with the plane 1555 to draw it into the apparatus 1501 and move it along within the apparatus 1501 for processing. Various portions of the apparatus 1501 may be cooled and/or heated depending on the requirements of reagent storage and reaction protocols. An indexing roller 1505 interacts with indexing marks or notches in the plane 1545 to identify and locate various rows of reservoirs with respect to other fixed components of the apparatus 1501. Subsequent to the indexing roller 1505, the plane 1545 is moved to a position above a stage to which any of multiple multi-well plates 1515 can be added and positioned such that the wells correspond spatially to the rows of reservoirs and openings in the plane 1545 as it is manipulated above by a plunger block 1525 and/or pipettes 1509. The stage can be subjected to controlled heating, cooling, shaking, magnetic manipulation, or other actions within the apparatus 1501 depending on the requirements of the reaction protocol.

### Example 1

Initial studies anticipated a blister/nozzle combination behaving similar to an inkjet where nozzle diameter would be small and blister compression critical to efficient droplet delivery. Surprisingly, a significantly larger diameter nozzle performed best and its efficiency was largely independent of blister compression characteristics (force or speed). A preferred nozzle diameter is from about 100µm to about 600µm, inclusive. Additionally there was concern that the presence of air in the blister would result in satellite formation (spray) as air was forced out with the liquid as is experienced with inkjets. The observation was that use of larger nozzles minimized this phenomenon. This resulted in an additional benefit that blisters did not need to be closely paired with reagent volumes. Additionally, standard size blisters could be filled with different volumes. The third unanticipated benefit to using the larger nozzles was that the dispensing efficiency was largely independent of the solution viscosity within the range of reagents investigated (aqueous solutions with and without salts, surfactants, and glycerol).

Results were obtained by producing prototypes of the blister packs. A circular cavity molded into a thin plastic carrier. On the ejection side, the polypropylene chassis contained a small aperture or nozzle. A temporary seal was applied to the nozzle through heat fusion (adhesives or other alternatives can be used). Next, the reagents to be ejected were pipetted onto the carrier followed by mineral oil. Finally, the blister was sealed by contacting the polypropylene chassis with a polypropylene film under pressure at an elevated temperature (while other methods such as adhesives are contemplated as well). Ejection of stored reagents was then actuated by means of a linear electromechanical motor which can be set to a target speed.

### Incorporation by Reference

References and citations to other documents, such as patents, patent applications, patent publications, journals, books, papers, web contents, have been made throughout this disclosure. All such documents are hereby incorporated herein by reference in their entirety for all purposes.

### Equivalents

The various described embodiments of the invention may be used in conjunction with one or more other embodiments unless technically incompatible.

Various modifications of the invention and many further embodiments thereof, in addition to those shown and described herein, will become apparent to those skilled in the art from the full contents of this document, including references to the scientific and patent literature cited herein. The subject matter herein contains important information, exemplification and guidance that can be adapted to the practice of this invention in its various embodiments and equivalents thereof.

## Claims

1. A reagent reservoir, the reagent reservoir comprising:
a first barrier and a second barrier defining a cavity, the cavity containing a reagent and an inert solution immiscible with the reagent and having a different density than the reagent;
wherein the first barrier comprises a deformable portion and the second barrier comprises a nozzle and when the deformable portion is acted upon by an external pressure, the deformable portion is pushed into the cavity, expressing the reagent through the nozzle.

2. A method for reducing a dead volume of reagent in a reagent delivery system, the method comprising:
providing a reagent reservoir containing a reagent; and introducing to the reservoir an inert solution immiscible with the reagent;
wherein the reservoir comprises a first and second barrier defining a cavity for containing the reagent and inert solution, the first barrier comprising a deformable portion and the second barrier comprising a nozzle, the deformable portion configured to push into the cavity, thereby dispensing the reagent through the nozzle.

3. The reagent reservoir according to claim 1 or the method of claim 2, wherein the inert solution has a different density than the reagent.

4. The reagent reservoir or method according to any one of the preceding claims, wherein the inert solution comprises a density that is lower than the reagent.

5. The reagent reservoir or method according to any one of the preceding claims, wherein the inert solution occupies a dead space between the reagent and the deformable portion inside the cavity.

6. The reagent reservoir or method according to any one of the preceding claims, wherein the inert solution is an oil.

7. The reagent reservoir or method according to any one of the preceding claims, wherein a dead volume of reagent is less than 5% of the total volume of reagent.

8. A reagent reservoir, the reagent reservoir comprising:
a first barrier and a second barrier defining a cavity having a reagent therein, the first barrier comprising a deformable portion configured to be collapsed into the cavity to deliver the reagent through a nozzle in the second barrier,
the cavity further containing an inert material immiscible with the reagent and occupying a dead space within the cavity, wherein upon collapse of the deformable portion, the inert solution facilitates delivery of the reagent through the nozzle.

9. The reagent reservoir according to claim 8, wherein the inert material is a liquid.

10. The reagent reservoir according to claim 8 or claim 9, wherein the inert material has a lower density than the reagent.

11. The reagent reservoir according to claim 8, wherein the inert material is semisolid at room temperature.

12. The reagent reservoir according to claim 11, wherein the inert material comprises: either a wax or a gel.

13. The reagent reservoir according to claim 10 or claim 11, wherein the inert material comprises a polymer.

14. A reagent delivery system comprising a reagent reservoir according to any one of claims 1 or claims 3 to 13.
